# EUROPÄISCHE PATENTANMELDUNG

(11) **EP 1 813 647 A1**
(43) Veröffentlichungstag der Anmeldung: **01.08.2007**
(21) Anmeldenummer: 06101069.0
(22) Anmeldetag: 31.01.2006
(51) Int. Cl.: C08L 67/00

(54) **Polyesterformmassen enthaltend Maleinimid-Copolymere**

(71) Anmelder: BASF Aktiengesellschaft, 67056 Ludwigshafen (DE)
(72) Erfinder: Aßmann, Jens, 68165, Mannheim (DE); Weber, Martin, 67487, Maikammer (DE); Eipper, Andreas, 67067, Ludwigshafen (DE)

(57) **Zusammenfassung**

Thermoplastische Formmassen, enthaltend die Komponenten A), B) sowie gegebenenfalls C), deren Summe 100 Gew.% ergibt,
A) 10 bis 99,9 Gew. % mindestens eins thermoplastischen Polyesters A),
B) 0,1 bis 50 Gew.% mindestens eines Maleinimid-Copolymers B), enthaltend Einheiten eines vinylaromatischen Monomers und Maleinimid-Einheiten, und
C) 0 bis 60 Gew.% weiterer Zusatzstoffe C).

## Beschreibung

Die Erfindung betrifft Thermoplastische Formmassen, enthaltend die Komponenten A), B) sowie gegebenenfalls C), deren Summe 100 Gew.-% ergibt,
A) 10 bis 99,9 Gew.-% mindestens eines thermoplastischen Polyesters A),
B) 0,1 bis 50 Gew.-% mindestens eines Maleinimid-Copolymers B), enthaltend Einheiten eines vinylaromatischen Monomers und Maleinimid-Einheiten, und
C) 0 bis 60 Gew.-% weiterer Zusatzstoffe C).

Außerdem betrifft die Erfindung die Verwendung der thermoplastischen Formmassen zur Herstellung von Formkörpern, Folien, Fasern und Schäumen, sowie die Formkörper, Folien, Fasern und Schäume aus den thermoplastischen Formmassen.

Um das Gewicht und damit den Treibstoffverbrauch von Kraftfahrzeugen zu reduzieren, sind viele Kfz-Bauteile aus thermoplastischen Kunststoffen gefertigt. Thermoplaste bieten weiterhin den Vorteil, dass sie einfacher und schneller als Metalle zu kompliziert geformten Bauteilen verarbeitet werden können, beispielsweise im Spritzgussverfahren.

Bei Beleuchtungselementen, z.B. Lampen, Leuchten, Scheinwerfern, Positionslichtern, Blinkleuchten, etc., werden - unabhängig davon ob sie in Kfz oder andere Anwendungen eingesetzt werden - eine gute Dimensionsbeständigkeit (geringes Schrumpfen) bei thermischer Belastung, gute Verarbeitbarkeit und ausgewogene mechanische Eigenschaften gefordert. Außerdem müssen die verwendeten Kunststoffe ein geringens Fogging aufweisen. Unter Fogging versteht man die Kondensation von verdampften, flüchtigen Bestandteilen aus Kunststoffen, Textil, Leder oder anderen Materialien unter Ausbildung eines trüben Belags an den Innenseiten von Glasscheiben oder anderen glatten Flächen. Das Fogging kann beispielsweise im Kfz-Innenraum als Belag auf der Windschutzscheibeninnenseite, oder in Kfz-Scheinwerfern als Belag auf der Scheinwerferglasinnenseite oder dem Scheinwerferreflektor auftreten. Der Belag auf dem Scheinwerferglas bzw. -reflektor kann die Lichtausbeute und Leuchtweite erheblich reduzieren, die Ausrichtung des Lichtstrahls verändern (Blendgefahr des Gegenverkehrs) und zu elektrischen Kurzschlüssen im Scheinwerfer führen.

Die EP 685 524 A1 beschreibt u.a. Mischungen aus den Thermoplasten ABS (Acrylnitril-Butadien-Styrol), AES (Acrylnitril-EPDM-Kautschuk-Styrol), AAS (Acrylnitril-Acrylat-Styrol) oder MBS (Methylmethacrylat-Butadien-Styrol) und hitzebeständigen, kautschukhaltigen Polymeren aus Styrol, Maleinimiden (z.B. N-Alkyl- oder N-Arylmaleinimiden) und ggf. Comonomeren wie Acrylnitril oder Maleinsäureanhydrid.

Die EP 684 282 A1 offenbart ein Verfahren zur Herstellung von hitzebeständigem ABS durch Vermischen eines ABS-Polymers, eines Maleinimid-Copolymers und eines Acrylnitril-Styrol-Copolymers. Das Maleinimid-Copolymer wird erhalten entweder durch Copolymerisation eines Vinylaromaten (z.B. Styrol), eines Imids einer ungesättigten Dicarbonsäure und eines Comonomers (z.B. Acrylnitril), oder durch Copolymerisation eines Vinylaromaten, eines ungesättigten Carbonsäureanhydrids (z.B. Maleinsäureanhydrid) und eines Comonomers und anschließende Umsetzung mit Ammoniak oder einem primären Amin zur Überführung der Anhydridgruppen in Imidgruppen.

In der EP 331 975 A1 werden Formmassen beschrieben, die ein Polyamid, ein Maleinimid-Copolymer ähnlich dem der genannten EP 684 282 A1, und ein carbonsäuremodifiziertes Polyolefin, enthalten.

Die EP 218 229 A2 lehrt Formmassen enthaltend ein kautschukhaltiges Styrolharz, ein Polycarbonat und bestimmte Acrylatpolymere. Das Styrolharz enthält eine disperse Kautschukphase und eine kontinuierliche Harzphase; letztere enthält Styrol oder andere Vinylaromaten und kann außerdem (Meth)acrylnitril und ein Maleinimidmonomer einpolymerisiert enthalten. Fakultativ können die Formmassen ein Polymer eines Vinylmonomeren enthalten, wofür u.a. auch Maleinimidmonomere genannt werden.

Polyester, beispielsweise Polybutylenterephthalat (PBT) oder Polyethylenterephthalat (PET) werden in diesen Schriften nicht erwähnt. Fogging wird ebenfalls nicht erwähnt.

Die ältere, nicht vorveröffentlichte deutsche Patentanmeldung Az. 102005034742.8 vom 21.07.05 offenbart Formmassen enthaltend einen Polyester, ein Terpolymer und ggf. weitere Zusatzstoffe. Das Terpolymer ist erhältlich aus einem Vinylaromaten, einem Alkylacrylat oder (Meth)acrylnitril, und einem Monomer, dass ein α,β-ungesättigtes Anhydrid enthält, beispielsweise Maleinsäureanhydrid. Maleinimidpolymere werden nicht erwähnt.

Das Eigenschaftprofil der genannten Polymere ist für anspruchsvolle Anwendungen nicht immer ausreichend.

Der vorliegenden Erfindung lag die Aufgabe zugrunde, den geschilderten Nachteilen abzuhelfen. Insbesondere sollten thermoplastische Polyester-Formmassen bereit gestellt werden, bei denen die daraus hergestellten Formteile eine gute Dimensionsbeständigkeit und gleichzeitig gute mechanische Eigenschaften aufweisen. Außerdem sollte die Wärmeformbeständigkeit der Formteile gut sein, und die Formmassen sollten ein möglichst geringes Fogging zeigen. Insbesondere sollte das gute Fogging-Verhalten nicht auf Kosten anderer Eigenschaften erzielt werden.

Dementsprechend wurden die eingangs genannten thermoplastischen Formmassen, deren Verwendung, und die aus ihnen erhältlichen Formkörper, Folien, Fasern und Schäume gefunden. Bevorzugte Ausführungsformen der Erfindung sind den Unteransprüchen zu entnehmen.

Hinweis zu den weiter unten gemachten Mengenangaben: bei der thermoplastischen Formmasse werden die Mengen der Komponenten A) bis C) innerhalb der genannten Bereiche derart gewählt, dass sich die Summe der Komponenten A) und B) sowie ggf. C) zu 100 Gew.-% ergänzt; Komponente C) ist fakultativ. Bei der Komponente B) werden die Mengen der Monomere b1), b2) und b3) bzw. b1), b*2) und b3) innerhalb der genannten Bereiche derart gewählt, dass sich die Summe der Monomere b1), b2) und ggf. b3), bzw. b1), b*2) und ggf. b3), zu 100 Gew.-% ergänzt; die Monomere b3) sind fakultativ.

### Polyester A)

Als Komponente A) enthalten die erfindungsgemäßen Formmassen 10 bis 99,9, bevorzugt 30 bis 99 und insbesondere 30 bis 90 Gew.-% mindestens eines thermoplastischen Polyesters A).

Allgemein werden Polyester A) auf Basis von aromatischen Dicarbonsäuren und einer aliphatischen oder aromatischen Dihydroxyverbindung verwendet. Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester A) sind Polyalkylenterephthalate, die sich von Alkandiolen mit 2 bis 6 C-Atomen ableiten, zu nennen. Von diesen werden insbesondere Polyethylenterephthalat (PET), Polypropylenterephthalat und Polybutylenterephthalat (PBT) oder deren Mischungen bevorzugt.

Besonders bevorzugt sind thermoplastische Formmassen, dadurch gekennzeichnet, dass der Polyester A) ausgewählt ist aus Poybutylenterephthalat und Polyethylenterephthalat. Weiterhin bevorzugt sind PET und/oder PBT, die bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester A) liegt im allgemeinen im Bereich von 50 bis 220, vorzugsweise von 80 bis 160, gemessen in einer 0,5 gew.-%igen Lösung des Polyesters in einem Phenol/o-Dichlorbenzol-Gemisch (Gewichtsverhältnis 1:1) bei 25°C gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Ganz besonders bevorzugte Formmassen enthalten als Komponente A) eine Mischung aus PBT und Polyestern, welche von PBT verschieden sind, wie beispielsweise Polyethylenterephthalat (PET). Der Anteil z.B. des Polyethylenterephthalates in der Mischung beträgt vorzugsweise bis zu 50, insbesondere 10 bis 35 Gew.-%, bezogen auf 100 Gew.-% der Komponente A).

Weiterhin kann man PET-Rezyklate (auch scrap-PET genannt), gegebenenfalls in Mischung mit Polyalkylenterephthalaten wie PBT, einsetzen.

Unter Rezyklaten versteht man im allgemeinen entweder 1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion, oder Randabschnitte von extrudierten Platten oder Folien; oder 2) Post Consumer Rezyklat: hierbei handelt es sich um Kunststoffartikel, die nach der Nutzung durch den Endverbraucher gesammelt und aufbereitet werden; der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte. Feuchtigkeitsspuren begünstigen die hydrolytische Spaltung von Polyestern bei der Verarbeitung. Daher empfiehlt es sich, das Rezyklat vorzutrocknen. Der Restfeuchtegehalt nach der Trocknung beträgt vorzugsweise < 0,2 %, insbesondere < 0,05 %.

Als weitere Gruppe geeigneter Polyester A) sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel (1) 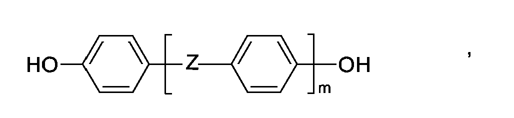 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise
Dihydroxydiphenyl,
   Di-(hydroxyphenyl)alkan,
   Di-(hydroxyphenyl)cycloalkan,
   Di-(hydroxyphenyl)sulfid,
   Di-(hydroxyphenyl)ether,
   Di-(hydroxyphenyl)keton,
   di-(hydroxyphenyl)sulfoxid,
   α ,α'-Di-(hydroxyphenyl)-dialkylbenzol,
   Di-(hydroxyphenyl)sulfon, Di-(hydroxybenzoyl)benzol,
   Resorcin und
   Hydrochinon
   sowie deren kernalkylierte oder kernhalogenierte Derivate genannt.
Von diesen werden
4,4'-Dihydroxydiphenyl,
   2,4-Di-(4'-hydroxyphenyl)-2-methylbutan
   α ,α'-Di-(4-hydroxyphenyl)-p-diisopropylbenzol,
   2,2-Di-(3'-methyl-4'-hydroxyphenyl)propan und
   2,2-Di-(3'-chlor-4'-hydroxyphenyl)propan,
   sowie insbesondere
2,2-Di-(4'-hydroxyphenyl)propan
   2,2-Di-(3',5-dichlordihydroxyphenyl)propan,
   1,1-Di-(4'-hydroxyphenyl)cyclohexan,
   3,4'-Dihydroxybenzophenon,
   4,4'-Dihydroxydiphenylsulfon und
   2,2-Di(3',5'-dimethyl-4'-hydroxyphenyl)propan
   oder deren Mischungen bevorzugt.

Selbstverständlich kann man als Polyester A) auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Ebenso können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel (2) 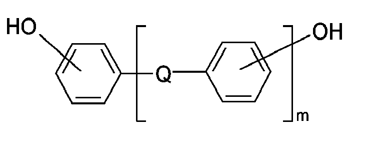 worin Q eine Einfachbindung, eine C₁- bis C₈-Alkylen-, eine C₂- bis C₃-Alkyliden-, eine C₃- bis C₆-Cycloalkylidengruppe, eine C₆- bis C₁₂-Arylengruppe sowie -O-, -S- oder -SO₂- bedeutet und m eine ganze Zahl von 0 bis 2 ist. Die Diphenole können an den Phenylenresten auch Substituenten tragen, z.B. C₁- bis C₆-Alkyl oder C₁- bis C₆-Alkoxy.

Bevorzugte Diphenole der vorstehenden Formel (2) sind beispielsweise Hydrochinon, Resorcin, 4,4'-Dihydroxydiphenyl, 2,2-Bis-(4-hydroxyphenyl)propan (= Bisphenol A), 2,4-Bis-(4-hydroxyphenyl)-2-methylbutan und 1,1-Bis-(4-hydroxyphenyl)cyclohexan. Besonders bevorzugt sind 2,2-Bis-(4-hydroxyphenyl)propan (Bisphenol A) und 1,1-Bis-(4-hydroxyphenyl)cyclohexan, sowie 1,1-Bis-(4-hydroxyphenyl)-3,3,5-trimethylcyclohexan (= Bisphenol TMC). Die Diphenole der allgemeinen Formel II sind an sich bekannt oder nach bekannten Verfahren herstellbar.

Sowohl Homopolycarbonate als auch Copolycarbonate sind als Komponente A) der erfindungsgemäßen Formmassen geeignet. Bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10.000 bis 200.000, vorzugsweise von 20.000 bis 80.000 g/mol.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. Bezüglich polydiorganosiloxanhaltigen Polycarbonaten siehe beispielsweise DE-OS 33 34 782.

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT® der Firma Bayer erhältlich.

### Maleinimid-Copolymer B)

Als Komponente B) enthalten die erfindungsgemäßen Formmassen 0,1 bis 50, bevorzugt 0,5 bis 20 und insbesondere 1 bis 15 Gew.-% mindestens eines Maleinimid-Copolymers B), das Einheiten eines vinylaromatischen Monomers und Maleinimid-Einheiten enthält.

Das Maleinimid-Copolymer kann beispielsweise durch eines von zwei Verfahren erhalten werden, die nachfolgend als Verfahren i) und Verfahren ii) bezeichnet werden.

Beim ersten Verfahren i) ist das Maleinimid-Copolymer B) erhältlich durch Polymerisation der folgenden Monomere b1), b2) und ggf. b3), deren Summe 100 Gew.-% ergibt,
b1) 50 bis 99,9, bevorzugt 52 bis 85 und insbesondere 55 bis 75 Gew.-% mindestens eines vinylaromatischen Monomers b1),
b2) 0,1 bis 50, bevorzugt 14,5 bis 47,5 und insbesondere 20 bis 44 Gew.-% mindestens eines Maleinimids b2), und
b3) 0 bis 50, bevorzugt 0,5 bis 30 und insbesondere 1 bis 25 Gew.-% mindestens eines Comonomers b3).

Bevorzugt ist das vinylaromatische Monomer b1) ausgewählt aus Styrol, α-Methylstyrol, Vinyltoluol, p-Methylstyrol, t-Butylstyrol und Chlorstyrol. Styrol ist besonders bevorzugt. Man kann auch Mischungen verschiedener vinylaromatischer Monomere b1) einsetzen.

Beim Monomer b2) umfasst der Begriff Maleinimid das Maleinimid als solches (Pyrrol-2,5-dion), und die substituierten Maleinimide, insbesondere N-substituierte Maleinimide. Bevorzugt ist das Maleinimid b2) ausgewählt aus Maleinimid (Pyrrol-2,5-dion), N-Alkylmaleinimiden mit 1 bis 10 C-Atomen im Alkylrest und N-Arylmaleinimiden mit 6 bis 20 C-Atomen im Arylrest. In der vorliegenden Anmeldung schließt Alkyl Cycloalkyl ein, und Aryl schließt Alkylaryl ein.

Als N-Alkylmaleinimide mit 1 bis 10 C-Atomen im Alkylrest eignen sich beispielsweise N-Methylmaleinimid, N-Ethylmaleinimid, N-Propylmaleinimid, N-Butylmaleinimid, N-Pentylmaleinimid, N-Hexylmaleinimid und N-Cycloalkylmaleinimide wie N-Cyclohexylmaleinimid.

Als N-Arylmaleinimide mit 6 bis 20 C-Atomen im Arylrest sind z.B. solche geeignet, in denen der Arylrest Phenyl, Chlorphenyl, Methylphenyl (= Tolyl), Methoxyphenyl oder Tribromphenyl ist.

N-Phenylmaleinimid als Maleinimid b2) ist besonders bevorzugt. Man kann auch Mischungen verschiedener Maleinimide b2) verwenden.

Das Comonomer b3) ist bevorzugt ausgewählt aus α,β-ungesättigten Carbonsäuren und den Nitrilen, Anhydriden, Estern und Amiden von α,β-ungesättigten Carbonsäuren.

Als Nitrile der α,β-ungesättigten Carbonsäuren (Vinylcyanide) eignen sich insbesondere Acrylnitril und Methacrylnitril. Als α,β-ungesättigte Carbonsäure bzw. deren Anhydrid kommen Maleinsäure, Methylmaleinsäure, 1,2-Dimethylmaleinsäure, Ethylmaleinsäure, Phenylmaleinsäure, die Anhydride dieser Maleinsäuren (insbesondere Maleinsäureanhydrid), sowie Acrylsäure und Methacrylsäure in Betracht.

Als Ester der α,β-ungesättigten Carbonsäuren sind insbesondere Alkylester der Acrylsäure bzw. Methacrylsäure mit 1 bis 20 C-Atomen im Alkylrest geeignet. Beispiele sind Methyl-, Ethyl-, Propyl-, Butyl-, Pentyl-, Hexyl-, Cyclohexyl-, Decyl- und Octadecyl-(meth)acrylat, sowie Ester mit Heteroatom-haltigen Alklyresten, z.B. Hydroxyethyl-, Methoxyethyl- und Glycidyl-(meth)acrylat. Die Schreibweise (Meth)acrylat bedeutet Acrylat oder Methacrylat.

Geeignete Amide der α,β-ungesättigten Carbonsäuren sind z.B. Acrylsäureamid und Methacrylsäureamid.

Von diesen Comonomeren b3) sind Acrylnitril, Methacrylnitril und Maleinsäureanhydrid besonders bevorzugt. Man kann auch Mischungen verschiedener Comonomere b3) einsetzen.

Die Polymerisation der Monomere b1), b2) und ggf. b3) zum Maleinimid-Polymer B) erfolgt in üblicher Weise, etwa als radikalische Polymerisation mit thermischer Initiierung oder unter Mitverwendung üblicher Initiatoren, beispielsweise Peroxid-Initiatoren wie Benzoylperoxid, und kann beispielsweise in Suspension, Emulsion, Lösung, Masse oder Masse/Suspension vorgenommen werden.

Bei dem zweiten Verfahren ii) ist das Maleinimid-Copolymer B) erhältlich durch Polymerisation der folgenden Monomere b1), b2*) und ggf. b3), deren Summe 100 Gew.-% ergibt,
b1) 50 bis 99,9, bevorzugt 52 bis 85 und insbesondere 55 bis 75 Gew.-% mindestens eines vinylaromatischen Monomers b1),
b*2) 0,1 bis 50, bevorzugt 14,5 bis 47,5 und insbesondere 20 bis 44 Gew.-% Maleinsäureanhydrid b*2), und
b3) 0 bis 50, bevorzugt 0 bis 20 und insbesondere 0 bis 5 Gew.-% mindestens eines Comonomers b3),

sowie Umsetzung des erhaltenen Polymers B*) mit Ammoniak oder einem primären Amin, wobei die Anhydridgruppen vollständig oder teilweise in Imidogruppen überführt werden.

Die beiden Verfahren i) und ii) unterscheiden sich demnach im wesentlichen dadurch, dass beim Verfahren ii) anstelle eines Maleinimids b2), Maleinsäureanhydrid b*2) eingesetzt wird, und die im erhaltenen Polymer B*) enthaltenen Anhydridgruppen mit Ammoniak oder primären Aminen vollständig oder teilweise zu Imidogruppen umgesetzt werden.

Für das Verfahren ii) geeignete vinylaromatische Monomere b1) bzw. Comonomere b3) wurden beim Verfahren i) bereits beschrieben.

Die Polymerisation der Monomere b1), b*2) und ggf. b3) zum Polymer B*) erfolgt in üblicher Weise, etwa als radikalische Polymerisation mit thermischer Initiierung oder unter Mitverwendung üblicher Initiatoren, beispielsweise Peroxid-Initiatoren wie Benzoylperoxid, und kann beispielsweise in Suspension, Emulsion, Lösung, Masse oder Masse/Suspension vorgenommen werden.

Bevorzugt ist das primäre Amin ausgewählt aus einem Alkylamin mit 1 bis 10 C-Atomen im Alkylrest und einem aromatischen Amin mit 6 bis 20 C-Atomen im Arylrest. Geeignete Alkylamine sind z.B. Methylamin, Ethylamin, Propylamin, Butylamin, Hexylamin, Cyclohexylamin oder Decylamin. Als aromatische Amine eigen sich u.a. Anilin (Phenylamin), Toluidin, Chlorphenylamin, Dichlorphenylamin, Bromphenylamin, Dibromphenylamin, Tribromphenylamin, Methoxyanilin und Naphthylamin. Anilin ist besonders bevorzugt.

Die Umsetzung des Polymers B*) mit Ammoniak bzw. dem primären Amin zum Maleinimid-Polymer B) kann z.B. in Lösung, in Suspension oder ohne Lösungs- bzw. Suspensionsmittel in einer Schmelze erfolgen. Als Lösungs- bzw. Suspensionsmittel eignen sich Ketone wie Aceton, Methylethylketon, Methylisobutylketon oder Cyclohexanon, Ether wie Tetrahydrofuran oder 1,4-Dioxan, oder aromatische Kohlenwasserstoffe wie Toluol oder Xylol, außerdem Dimethylformamid, Dimethylsulfoxid oder N-Methyl-2-pyrrolidon.

Die Umsetzung mit Ammoniak bzw. dem primären Amin findet üblicherweise bei Temperaturen von 50 bis 350, bevorzugt 100 bis 300°C statt. Als Reaktor kann man z.B. Autoklaven, oder insbesondere bei einer Umetzung in der Schmelze, einen Extruder (im Sinne einer Reaktivextrusion) oder andere Schmelzknetapparaturen verwenden. Falls erforderlich, kann man bei der Umsetzung Katalysatoren mitverwenden, beispielsweise tertiäre Amine wie Trimethylamin, Triethylamin, Tributylamin, N,N-Dimethylanilin oder N,N-Diethylanilin.

Nach beiden Verfahren i) und ii) erhält man ein Maleinimid-Copolymer B). Sein gewichtsmittleres Molekulargewicht kann in weiten Grenzen variieren. Mittlere Molekulargewichte im Bereich von 60.000 bis 350.000, bevorzugt 80.000 bis 300.000 und insbesondere 90.000 bis 210.000 g/mol haben sich als geeignet erwiesen. Das Molekulargewicht (Gewichtsmittelwert) lässt sich beispielsweise durch Gelpermeationschromatographie (GPC) bestimmen.

Bevorzugt beträgt der Gehalt an Anhydridgruppen im Maleinimid-Copolymer B) 0 bis 30, bevorzugt 0,5 bis 20 und insbesondere 1 bis 15 mol-%. Der Anhydridgruppengehalt lässt sich beispielsweise beim Verfahren ii) durch die beschriebene Umsetzung mit Ammoniak bzw. dem primären Amin einstellen. Er kann z.B. durch potentiometrische Titration oder FT-IR-(Fourier-Transformation-Infrarot)-Spektroskopie bestimmt werden.

Weitere Einzelheiten zum Maleinimid-Copolymer B) sind beispielsweise den eingangs genannten Schriften EP 684 282 A1 und EP 331 975 A1 zu entnehmen.

### Zusatzstoffe C)

Als Komponente C) können die erfindungsgemäßen Formmassen 0 bis 60, insbesondere bis zu 50 Gew.- % weiterer Zusatzstoffe enthalten. Solche Zusatzstoffe sind insbesondere Verarbeitungshilfsmittel; von A) und B) verschiedene Polymere; und Additive, die der erfindungsgemäßen Formmassen bestimmte Eigenschaften verleihen; und.

Bevorzugt sind die Zusatzstoffe C) ausgewählt aus Estern oder Amiden gesättigter oder ungesättigter aliphatischer Carbonsäuren mit 10 bis 40, insbesondere 16 bis 22 C-Atomen mit aliphatischen gesättigten Alkoholen oder Aminen mit 2 bis 40, insbesondere 2 bis 6 C-Atomen. Die Menge dieser Ester bzw. Amide beträgt üblicherweise 0 bis 5, vorzugsweise 0,05 bis 3 und insbesondere 0,1 bis 2 Gew.-%, bezogen auf die erfindungsgemäße Formmasse.

Die Carbonsäuren können Mono- oder Dicarbonsäuren sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt. Die aliphatischen Alkohole können 1 bis 4 OH-Gruppen enthalten. Geeignete Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind. Die aliphatischen Amine können Mono, Di- oder Triamine sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind.

Als Zusatzstoff C) besonders bevorzugte Ester bzw. Amide sind entsprechend Glycerindistearat, Glycerintristearat, Ethylendiamindistearat, Glycerinmonopalmitrat, Glycerintrilaurat, Glycerinmonobehenat und Pentaerythrittetrastearat. Es können auch Mischungen verschiedener Ester oder verschiedener Amide oder von Estern und Amiden eingesetzt werden, wobei das Mischungsverhältnis beliebig ist.

Weitere übliche Zusatzstoffe C) sind beispielsweise in Mengen bis zu 40, vorzugsweise bis zu 30 Gew.-% kautschukelastische Polymerisate. Sie werden auch als Schlagzähmodifier, Elastomere oder Kautschuke bezeichnet.

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke. EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

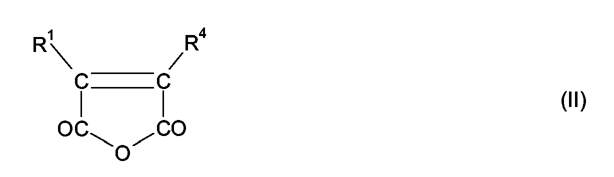

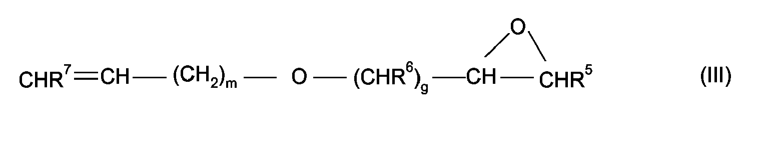

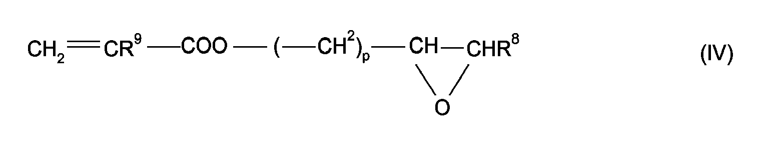

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)-acrylsäureestern.

Besonders bevorzugt sind Copolymerisate aus
- 50 bis 98, insbesondere 55 bis 95 Gew.-% Ethylen,
- 0,1 bis 40, insbesondere 0,3 bis 20 Gew.-% Glycidylacrylat
   und/oder Glycidylmethacrylat, (Meth)acrylsäure und/oder Maleinsäureanhydrid,
   und
- 1 bis 45, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester. Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 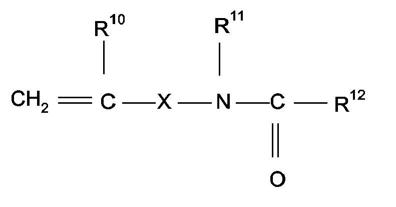 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 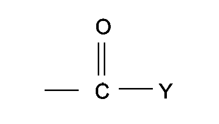
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

In einer Ausführungsform der Erfindung sind die erfindungsgemäßen thermoplastischen Formmassen dadurch gekennzeichnet, dass sie Acrylnitril-Butadien-Styrol-Copolymere (ABS) nur in Mengen von maximal 20 Gew.-% enthalten. Besonders bevorzugt enthalten die Formmassen bei dieser Ausführungsform maximal 10 Gew.-% ABS, und insbesondere kein ABS.

In einer weiteren Ausführungsform enthalten die erfindungsgemäßen Formmassen die Copolymere AES (Acrylnitril-EP(D)M-Kautschuk-Styrol), ASA (Acrylnitril-Styrol-Acrylat), MBS (Methylmethacrylat-Butadien-Styrol) oder MABS (Methylmethacrylat-Acrylnitril-Butadien-Sytrol) nur in Mengen von maximal 20, besonders bevorzugt bei dieser Ausführungsform maximal 10 Gew.-%. Ganz besonders bevorzugt enthalten die Formmassen bei dieser Ausführungsform keines der Copolmyere AES, ASA, MBS und MABS.

Weiterhin als Zusatzstoffe C) geeignet sind faser- oder teilchenförmige Füllstoffe. Genannt seien Kohlenstofffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 40 %, bezogen auf die Formmasse, eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden. Mischungen von Glasfasern C) mit Komponente A) im Verhältnis von 1 : 100 bis 1 : 2 und bevorzugt von 1 : 10 bis 1 : 3 seien beispielhaft genannt.

Die faserförmigen Füllstoffe können zur besseren Verträglichkeit mit dem Thermoplasten mit einer Silanverbindung oberflächlich vorbehandelt sein. Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
- X: NH₂-, 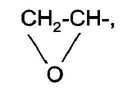 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-%, bezogen auf den Füllstoff, zur Oberflächenbeschichtung eingesetzt.

Geeignet sind auch nadelförmige mineralische Füllstoffe. Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Ebenfalls als Zusatzstoff C) in Betracht kommt Talkum, welches ein hydratisiertes Magnesiumsilikat der Zusammensetzung Mg₃[(OH)₂/Si₄O₁₀] bzw. 3 MgO **•** 4 SiO₂ • H₂O ist. Diese sogenannten Drei-Schicht-Phyllosilikate weisen einen triklinen, monoklinen oder rhombischen Kristallaufbau auf mit blättchenformigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, bei dem 99,5 Gew.-% der Teilchen eine Teilchengröße unter 20 µm aufweisen. Die Teilchengrößenverteilung wird üblicherweise durch Sedimentationsanalyse DIN 6616-1 bestimmt und beträgt vorzugsweise: 99,5 Gew.-% < 20 µm; 99 Gew.-% < 10 µm, 85 Gew.-% < 5 µm; 60 Gew.-% < 3 µm; 43 Gew.-% < 2 µm. Derartige Produkte sind im Handel als Micro-Talc I.T. extra von Fa. Omya erhältlich. Sofern verwendet, ist Talkum in Mengen von 0,01 bis 20 Gew.% in den Formmassen enthalten.

Weitere geegnete Zusatzstoffe C) sind übliche Additive, insbesondere Verarbeitungshilfsmittel, Stabilisatoren, Oxidationsverzögerer, Mittel gegen Wärmezersetzung (Wärmestabilisatoren) und Zersetzung durch ultraviolettes Licht (UV-Stabilisatoren), Gleit- und Entformungsmittel, Färbemittel wie Farbstoffe und Pigmente, Keimbildungsmittel, Weichmacher usw.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen zu nennen. Falls mitverwendet beträgt ihre Menge üblicherweise bis zu 1 Gew-% der thermoplastischen Formmassen.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Geegnete Farbmittel sind anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone in den dafür üblichen Mengen.

Als Keimbildungsmittel können Natriumphenylphosphinat, Aluminiumoxid, Siliziumdioxid sowie bevorzugt Talkum eingesetzt werden.

Weitere Gleit- und Entformungsmittel werden, falls mitverwendet, üblicherweise in Mengen bis zu 1 Gew.-% eingesetzt. Es sind bevorzugt langkettige Fettsäuren, z.B. Stearinsäure oder Behensäure, deren Salze, z.B. Ca- oder Zn-Stearat, oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%. Beispiele hierfür sind Polytetrafluorethylen (PTFE), Tetrafluorethylenhexafluor-propylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag 1952, Seite 484 bis 494 und von Wall in "Fluorpolymers" , Wiley Interscience 1972, beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

### Herstellung und Verwendung der Formmassen

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer weiteren bevorzugten Arbeitsweise können die Komponenten B) sowie gegebenenfalls C) mit einem Präpolymeren (Vorstufe) der Komponente A) gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Gegenstand der Erfindung ist ebenfalls die Verwendung der erfindungsgemäßen thermoplastischen Formmassen zur Herstellung von Formkörpern, Folien, Fasern und Schäumen. Bevorzugt ist diese Verwendung dadurch gekennzeichnet, dass die Formkörper Beleuchtungselemente sind.

Besonders bevorzugt ist die Verwendung dadurch gekennzeichnet, dass die Beleuchtungselemente ausgewählt sind aus Scheinwerferteilen, Lampenteilen, Blenden oder deren Bestandteilen, Scheinwerferblenden oder deren Bestandteilen, Lampenblenden oder deren Bestandteilen, Seitenverkleidungen, Beplankungen, strukturellen Teilen in Beleuchtungsanlagen, Außenbeleuchtungen oder deren Bestandteilen, oder Bootskörpern, Rasenmähergehäusen und Motorradteilen, welche Beleuchtungselemente enthalten.

Ganz besonders bevorzugt ist die Verwendung dadurch gekennzeichnet, dass die Beleuchtungselemente Scheinwerferteile in Kraftfahrzeugen sind.

Weiterer Erfindungsgegenstand sind die Formkörper, Folien, Fasern und Schäume aus den erfindungsgemäßen thermoplastischen Formmassen. Bevorzugt sind die Formkörper dadurch gekennzeichnet, dass die Formkörper Beleuchtungselemente sind.

Besonders bevorzugt sind die Formkörper dadurch gekennzeichnet, dass die Beleuchtungselemente ausgewählt sind aus Scheinwerferteilen, Lampenteilen, Blenden oder deren Bestandteilen, Scheinwerferblenden oder deren Bestandteilen, Lampenblenden oder deren Bestandteilen, Seitenverkleidungen, Beplankungen, strukturellen Teilen in Beleuchtungsanlagen, Außenbeleuchtungen oder deren Bestandteilen, oder Bootskörpern, Rasenmähergehäusen und Motorradteilen, welche Beleuchtungselemente enthalten.

Ganz besonders bevorzugt sind die Formkörper dadurch gekennzeichnet, dass die Beleuchtungselemente Scheinwerferteile in Kraftfahrzeugen sind.

Die Formkörper weisen eine gute Dimensionsbeständigkeit und gleichzeitig vorteilhafte mechanische Eigenschaften auf. Sie zeichnen sich außerdem durch eine hohe Wärmeformbeständigkeit aus, und die Formmassen bzw. Formteile zeigen ein sehr geringes Fogging zeigen. Dabei wird das gute Fogging-Verhalten nicht auf Kosten anderer Eigenschaften erzielt.

### Beispiele

Es wurden folgende Komponenten eingesetzt:

### Komponente A1:

Polybutylenterephthalat mit einer Viskositätszahl VZ von 130 ml/g, gemessen an einer 0,5 gew.-%igen Lösung des Polymers in einem Phenol/o-Dichlorbenzol-Gemisch (Gewichtsverhältnis 1:1) bei 25°C gemäß ISO 1628, und einem Carboxylendgruppengehalt, ermittelt durch potentiometrische Titration, von 34 mval/kg. Es wurde das Handelsprodukt Ultradur® B 4500 von BASF verwendet

### Komponente A2:

Polybutylenterephthalat mit einer VZ von 105 ml/g, und einem Carboxylendgruppengehalt von 33 mval/kg, beide bestimmt wie bei Komponente A1 beschrieben. Es wurde das Handelsprodukt Ultradur® B 2550 von BASF verwendet.

### Komponente B:

Maleinimid-Copolymer auf Basis von Styrol und Maleinimid, erhältlich beispielsweise durch Polymerisation von Styrol und Maleinsäureanhydrid, und Umsetzung des erhaltenen Polymers mit Anilin, wodurch die Anhydridgruppen im Imidogruppen überführt werden. Es wurden Handelsprodukte des Typs Denka IP MS von Fa. Denka (Denki Kagaku Kogyo Kabushiki Kaisha) verwendet.

Alle Komponenten B-a bis B-f wiesen eine Glasübergangstemperatur Tg von 196°C auf, bestimmt mittels Differential Scanning Calorimetry (DSC). Sie unterschieden sich durch ihre Schmelze-Volumenfließrate (melt volume ratio, MVR), die bei 265°C Schmelzetemperatur und 10 kg Belastung nach EN ISO 1133 bestimmt wurde, und durch den Gehalt an Maleinsäureanhydridgruppen, der wie folgt bestimmt wurde:
In einer ersten Bestimmung wurde Komponente B hydrolysiert, indem man 1 g der Komponente B in 45 ml Pyridin löste und nach Zugabe von 5 ml Wasser 60 min rührte. Dadurch wurde jede der Anhydridgruppen in zwei Säuregruppen überführt, die man durch nichtwässrige Titration potentiometrisch quantifizierte. In einer zweiten Bestimmung wurde Komponente B methanolysiert, indem man 1 g der Komponente B in 5 ml Pyridin löste und nach Zugabe von 2 ml Methanol 60 min rührte. Dadurch wurde jede der Anhydridgruppen in eine Säuregruppe und eine Methylestergruppe überführt; die Säuregruppe wurde durch nichtwässrige Titration potentiometrisch quantifiziert. Die Differenz der auf diese Weise bestimmten Säuregruppenzahlen (erste minus zweite Bestimmung) entspricht der Anzahl der Anhydridgruppen im Polymer.

Tabelle 1 fasst die Komponenten B zusammen.

**Tabelle 1: erfindungsgemäße Komponenten B-a bis B-f**

| Komponente | Handelsprodukt | Schmelze-Volumen-Fließrate (265°C / 10 kg) [cm³/10 min] | Gehalt an Maleinsäureanhydridgruppen [mol-%] |
|---|---|---|---|
| B-a | Denka IP MS-NA | 1,5 | 3 |
| B-b | Denka IP MS-H | 1,5 | 1 |
| B-c | Denka IP MS-L | 1,5 | 5 |
| B-d | Denka IP MS-L2A | 1,5 | 8 |
| B-e | Denka IP MS-L3A | 1,6 | 12 |
| B-f | Denka IP MS-L3Q | 7,9 | 12 |

### Komponente B-V (zum Vergleich):

Zum Vergleich wurde als nicht erfindungsgemäße Komponente B-V ein Copolymer aus 68 Gew.-% Styrol, 29,9 Gew.-% Acrylnitril und 2,1 Geww.-% Maleinsäureanhydrid verwendet. Die Viskositätszahl VZ dieser Komponente betrug 65 ml/g, gemessen an einer 0,5 gew.-%igen Lösung des Polymers in Dimethylformamid bei 25°C gemäß ISO 1628.

### Komponente C:

Pentaerythrittetrastearat; es wurde das Handelsprodukt Loxiol® 1206 der Firma Cognis eingesetzt.

Die Komponenten A bis C wurden gemäß den in Tabelle 2 genannten Zusammensetzungen auf einem Zweischneckenextruder ZSK 30 von Fa.Werner & Pfleiderer bei 260°C homogenisiert, die Mischung in ein Wasserbad extrudiert, granuliert und getrocknet. Aus dem Granulat wurden auf einer Spritzgussmaschine bei 260°C Schmelzetemperatur und 80°C Werkzeugoberflächentemperatur Rundscheiben, Schulterstäbe bzw. Normkleinstäbe gespritzt und anschließend geprüft.

Zur Beurteilung des Foggingverhaltens wurden Rundscheiben von 80 mm Durchmesser und 4 mm Dicke hergestellt und ihr Foggingverhalten gemäß DIN 75 201 (Sept. 1992), Verfahren A, untersucht. Dabei betrug die Lagerdauer der Rundscheiben 24 Stunden und die Lagertemperatur 160°C.

Die gemäß der genannten DIN 75 201 erhaltenen befoggten Glasplatten wurden an einem Gerät haze-gard plus von Fa. BYK-Gardner GmbH (Geretsried, DE) gemäß ASTM D 1003 auf Gesamttransmission, Trübung und Bildschärfe untersucht. Dabei ist die Trübung (Haze) die diffuse Transmission, messbar als Großwinkelstreuung mit über 2,5° Abweichung vom einfallenden Lichtstrahl, und die Bildschärfe (clarity) die diffuse Transmission, messbar als Kleinwinkelstreuung in einem Winkelbereich kleiner 2,5°. Je höher der Wert für die Gesamttransmission, bzw. je geringer der Wert für die Trübung, bzw. je höher der Wert für die Bildschärfe, desto geringer war das Fogging.

Zur Beurteilung der mechanischen Eigenschaften wurde Schulterstäbe hergestellt und daran im Zugversuch bei 20°C die Streckspannung, Bruchspannung, Streckdehnung, Bruchdehnung und der Elastizitätsmodul (E-Modul) gemäß ISO 527-2/1A/50 ermittelt.

Die Wärmeformbeständigkeit der Formmassen wurde an Normkleinstäben als Vicat-Erweichungstemperatur gemäß DIN EN ISO 306, Methode B (Vicat B) mit einer Kraft von 50 N und 50 K/h Temperatursteigerung ermittelt.

Tabelle 2 fasst die Zusammensetzungen und Eigenschaften der Formmassen zusammen. V bedeutet zum Vergleich, nb nicht bestimmt. Aufgrund unterschiedlicher Mengen der Polyester A1 und A2 direkt vergleichbar ist Beispiel 1 V mit Beispiel 2, sowie Beispiel 3V mit den Beispielen 4 bis 8.

**Tabelle 2: Zusammensetzung und Eigenschaften (V zum Vergleich, nb nicht bestimmt)**

| Beispiel | 1V | 2 | 3V | 4 | 5 | 6 | 7 | 8 |
|---|---|---|---|---|---|---|---|---|
| Zusammensetzung [Gew.-%] | | | | | | | | |
| A1 | 59,75 | 59,75 | 47,5 | 47,5 | 47,5 | 47,5 | 47,5 | 47,5 |
| A2 | 35,00 | 35,00 | 47,25 | 47,25 | 47,25 | 47,25 | 47,25 | 47,25 |
| B | B-V 5,00 | B-a 5,00 | B-V 5,00 | B-b 5,00 | B-c 5,00 | B-d 5,00 | B-e 5,00 | B-f 5,00 |
| C | 0,25 | 0,25 | 0,25 | 0,25 | 0,25 | 0,25 | 0,25 | 0,25 |
| Eigenschaften | | | | | | | | |
| Ges.transmission [%] | 94,0 | 94,3 | 94 | 94,3 | 94,3 | 94,3 | 94 | 94,2 |
| Trübung [%] | 27,9 | 8,43 | 9,27 | 2,14 | 3,52 | 4,86 | 12,3 | 5,1 |
| Bildschärfe [%] | 50,5 | 93,1 | 60,4 | 85,6 | 86,3 | 88,9 | 91,3 | 89,7 |
| Streckspannung [N/mm²] | 56,9 | 56,4 | 58,8 | 58 | 58,2 | 57,8 | 58,1 | 58 |
| Bruchspannung [N/mm²] | 54,7 | 54 | nb | 47,2 | 48,6 | 49,4 | 49,8 | 48,8 |
| Streckdehnung [%] | 4,1 | 3,5 | 6,7 | 3,5 | 3,6 | 3,6 | 3,7 | 3,7 |
| Bruchdehnung [%] | 3,1 | 8,5 | nb | 10,4 | 11,6 | 12,7 | 13,1 | 13,2 |
| E-Modul [N/mm²] | 2662 | 2643 | 2622 | 2617 | 2612 | 2609 | 2597 | 2610 |
| Vicat B [°C] | 169,5 | 180,1 | 171,8 | 182,4 | 180,4 | 179,6 | 180,6 | 180,7 |

Verglichen mit den Vergleichs-Formmassen aus Beispiel 1V zeigten die erfindungsgemäßen Formmassen aus Beispiel 2 im Fogging-Versuch eine wesentlich geringere Trübung (8,43 statt 27,9 %) und eine deutlich höhere Bildschärfe (93,1 statt 50,5 %), also ein wesentlich geringeres Fogging. Außerdem wiesen die erfindungsgemäßen Formmassen eine höhere Wärmeformbeständigkeit auf. Dabei waren die sonstigen mechanischen Eigenschaften auf vergleichbarem Niveau.

Die erfindungsgemäßen Formmassen aus Beispiel 4 bis 8 wiesen im Fogging-Test eine deutlich geringeres Fogging auf als die Vergleichs-Formmassen des Beispiels 3V, wie sich aus der erheblich höheren Bildschärfe (über 85 statt 60,4 %) und der geringeren Trübung (mit Ausnahme von Beispiel 7, dort jedoch die höchste Bildschärfe) ergibt. Dabei waren Streckspannung und E-Modul auf vergleichbarem Niveau, und die Wärmeformbeständigkeit der erfindungsgemäßen Formmassen höher als die der Vergleichs-Formmasse.

## Patentansprüche

1. Thermoplastische Formmassen, enthaltend die Komponenten A), B) sowie gegebenenfalls C), deren Summe 100 Gew.-% ergibt,
A) 10 bis 99,9 Gew.-% mindestens eines thermoplastischen Polyesters A),
B) 0,1 bis 50 Gew.-% mindestens eines Maleinimid-Copolymers B), enthaltend Einheiten eines vinylaromatischen Monomers und Maleinimid-Einheiten, und
C) 0 bis 60 Gew.-% weiterer Zusatzstoffe C).

2. Thermoplastische Formmassen nach Anspruch 1, **dadurch gekennzeichnet, dass** der Polyester A) ausgewählt ist aus Poybutylenterephthalat und Polyethylenterephthalat.

3. Thermoplastische Formmassen nach den Ansprüchen 1 bis 2, **dadurch gekennzeichnet, dass** das Maleinimid-Copolymer B) erhältlich ist durch Polymerisation der folgenden Monomere b1), b2) und ggf. b3), deren Summe 100 Gew.-% ergibt,
b1) 50 bis 99,9 Gew.-% mindestens eines vinylaromatischen Monomers b1),
b2) 0,1 bis 50 Gew.-% mindestens eines Maleinimids b2), und
b3) 0 bis 50 Gew.-% mindestens eines Comonomers b3).

4. Thermoplastische Formmassen nach den Ansprüchen 1 bis 2, **dadurch gekennzeichnet, dass** das Maleinimid-Copolymer B) erhältlich ist durch Polymerisation der folgenden Monomere b1), b2*) und ggf. b3), deren Summe 100 Gew.-% ergibt,
b1) 50 bis 99,9 Gew.-% mindestens eines vinylaromatischen Monomers b1),
b2) 0,1 bis 50 Gew.-% Maleinsäureanhydrid b*2), und
b3) 0 bis 50 Gew.-% mindestens eines Comonomers b3),
sowie Umsetzung des erhaltenen Polymers B*) mit Ammoniak oder einem primären Amin, wobei die Anhydridgruppen vollständig oder teilweise in Imidogruppen überführt werden.

5. Thermoplastische Formmassen nach den Ansprüchen 1 bis 4, **dadurch gekennzeichnet, dass** das vinylaromatische Monomer ausgewählt ist aus Styrol, α-Methylstyrol, Vinyltoluol, p-Methylstyrol, t-Butylstyrol und Chlorstyrol.

6. Thermoplastische Formmassen nach den Ansprüchen 1 bis 3 und 5, **dadurch gekennzeichnet, dass** das Maleinimid b2) ausgewählt ist aus Maleinimid, N-Alkylmaleinimiden mit 1 bis 10 C-Atomen im Alkylrest und N-Arylmaleinimiden mit 6 bis 20 C-Atomen im Arylrest.

7. Thermoplastische Formmassen nach den Ansprüchen 1 bis 3 und 5 bis 6, **dadurch gekennzeichnet, dass** das Maleinimid b2) N-Phenylmaleinimid ist.

8. Thermoplastische Formmassen nach den Ansprüchen 1 bis 7, **dadurch gekennzeichnet, dass** das Comonomer b3) ausgewählt ist aus α,β-ungesättigten Carbonsäuren und den Nitrilen, Anhydriden, Estern und Amiden von α,β-ungesättigten Carbonsäuren.

9. Thermoplastische Formmassen nach den Ansprüchen 1, 2, 4, 5 und 8, **dadurch gekennzeichnet, dass** das primäre Amin ausgewählt ist aus einem Alkylamin mit 1 bis 10 C-Atomen im Alkylrest und einem aromatischen Amin mit 6 bis 20 C-Atomen im Arylrest.

10. Thermoplastische Formmassen nach den Ansprüchen 1 bis 9, **dadurch gekennzeichnet, dass** die Zusatzstoffe C) ausgewählt sind aus Estern oder Amiden gesättigter oder ungesättigter aliphatischer Carbonsäuren mit 10 bis 40 C-Atomen mit aliphatischen gesättigten Alkoholen oder Aminen mit 2 bis 40 C-Atomen.

11. Thermoplastische Formmassen nach den Ansprüchen 1 bis 10, **dadurch gekennzeichnet, dass** sie Acrylnitril-Butadien-Styrol-Copolymere nur in Mengen von maximal 20 Gew.-% enthalten.

12. Verwendung der thermoplastischen Formmassen gemäß den Ansprüchen 1 bis 11 zur Herstellung von Formkörpern, Folien, Fasern und Schäumen.

13. Verwendung nach Anspruch 12, **dadurch gekennzeichnet, dass** die Formkörper Beleuchtungselemente sind.

14. Verwendung nach den Ansprüchen 12 bis 13, **dadurch gekennzeichnet, dass** die Beleuchtungselemente ausgewählt sind aus Scheinwerferteilen, Lampenteilen, Blenden oder deren Bestandteilen, Scheinwerferblenden oder deren Bestandteilen, Lampenblenden oder deren Bestandteilen, Seitenverkleidungen, Beplankungen, strukturellen Teilen in Beleuchtungsanlagen, Außenbeleuchtungen oder deren Bestandteilen, oder Bootskörpern, Rasenmähergehäusen und Motorradteilen, welche Beleuchtungselemente enthalten.

15. Verwendung nach den Ansprüchen 12 bis 14, **dadurch gekennzeichnet, dass** die Beleuchtungselemente Scheinwerferteile in Kraftfahrzeugen sind.

16. Formkörper, Folien, Fasern und Schäume aus den thermoplastischen Formmassen gemäß den Ansprüchen 1 bis 11.

17. Formkörper nach Anspruch 16, **dadurch gekennzeichnet, dass** die Formkörper Beleuchtungselemente sind.

18. Formkörper nach den Ansprüchen 16 bis 17, **dadurch gekennzeichnet, dass** die Beleuchtungselemente ausgewählt sind aus Scheinwerferteilen, Lampenteilen, Blenden oder deren Bestandteilen, Scheinwerferblenden oder deren Bestandteilen, Lampenblenden oder deren Bestandteilen, Seitenverkleidungen, Beplankungen, strukturellen Teilen in Beleuchtungsanlagen, Außenbeleuchtungen oder deren Bestandteilen, oder Bootskörpern, Rasenmähergehäusen und Motorradteilen, welche Beleuchtungselemente enthalten.

19. Formkörper nach den Ansprüchen 16 bis 18, **dadurch gekennzeichnet, dass** die Beleuchtungselemente Scheinwerferteile in Kraftfahrzeugen sind
